# EUROPEAN PATENT APPLICATION

(11) **EP 2 472 760 A1**
(43) Date of publication of application: **04.07.2012**
(21) Application number: 10197338.6
(22) Date of filing: 30.12.2010
(51) Int. Cl.: H04J 14/02

(54) **Optical communication system and method for data processing in an optical network**

(71) Applicant: Nokia Siemens Networks Oy, 02610 Espoo (FI)
(72) Inventor: Rohde, Harald, 81673, München (DE); Treyer, Thomas, 81379, München (DE)

(57) **Abstract**

An optical communication system and a method for data processing in an optical network are provided, the optical network including a first optical transmission group for generating a first plurality of wavelengths in a downstream direction, a second optical transmission group for generating a second plurality of wavelengths in the downstream direction and a plurality of optical network units for receiving the first and second plurality of wavelengths, wherein the plurality of optical network units are configured to change between a first mode and a second mode of data transmission, the method comprising the steps of allocating the wavelengths associated with the optical network units in the first mode of data transmission in the first optical transmission group,
allocating the wavelengths associated with the optical network units in the second mode of data transmission in the second optical transmission group and deactivating the second optical transmission group.

## Description

### FIELD OF THE INVENTION

The invention relates to a method and to a device for data processing in an optical network and to an optical network comprising such a device.

### BACKGROUND OF THE INVENTION

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

A passive optical network (PON) is a promising approach regarding fiber-to-the-home (FTTH), fiber-to-the-business (FTTB) and fiber-to-the-curb (FTTC) scenarios, in particular as it overcomes the economic limitations of traditional point-to-point solutions.

The PON has been standardized and it is currently being deployed by network service providers worldwide. Conventional PONs distribute downstream traffic from the optical line terminal (OLT) to optical network units (ONUs) in a broadcast manner while the ONUs send upstream data packets multiplexed in time to the OLT. Hence, communication among the ONUs needs to be conveyed through the OLT involving electronic processing such as buffering and/or scheduling, which results in latency and degrades the throughput of the network.

In fiber-optic communications, wavelength-division multiplexing (WDM) is a technology which multiplexes multiple optical carrier signals on a single optical fiber by using different wavelengths (colors) of laser light to carry different signals. This allows for a multiplication in capacity, in addition to enabling bidirectional communications over one strand of fiber.

WDM systems are divided into different wavelength patterns, conventional or coarse and dense WDM. WDM systems provide, e.g., up to 16 channels in the 3rd transmission window (C-band) of silica fibers around 1550 nm. Dense WDM uses the same transmission window but with denser channel spacing. Channel plans vary, but a typical system may use 40 channels at 100 GHz spacing or 80 channels with 50 GHz spacing. Some technologies are capable of 25 GHz spacing. Amplification options enable the extension of the usable wavelengths to the L-band, more or less doubling these numbers.

Optical access networks, e.g., a coherent Ultra-Dense Wavelength Division Multiplex (UDWDM) network, are deemed to be the future data access technology.

Within the UDWDM concept, potentially all wavelengths are routed to each ONU. The respective wavelength is selected by the tuning of the local oscillator (LO) laser at the ONU.

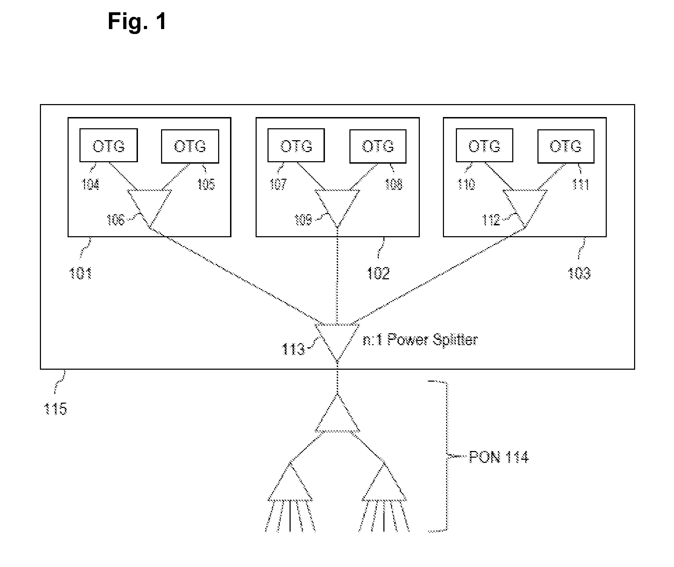

Fig.1 shows a UDWDM optical access system deployed with an optical line terminal (OLT) 115. The OLT 115 comprises three linecards (also referred to as line interface card, LIC) 101, 102, 103. The linecard 101 comprises two optical transmission groups (OTGs) 104, 105 that are connected to a splitter 106 and the output of the splitter 106 is connected to a power splitter 113. Accordingly, OTGs 107, 108 of the LIC 102 are combined via a splitter 109 towards said power splitter 113 and OTGs 110, 111 of the LIC 103 are combined via a splitter 112 towards said power splitter 113. The power splitter 113 is connected to a PON 114.

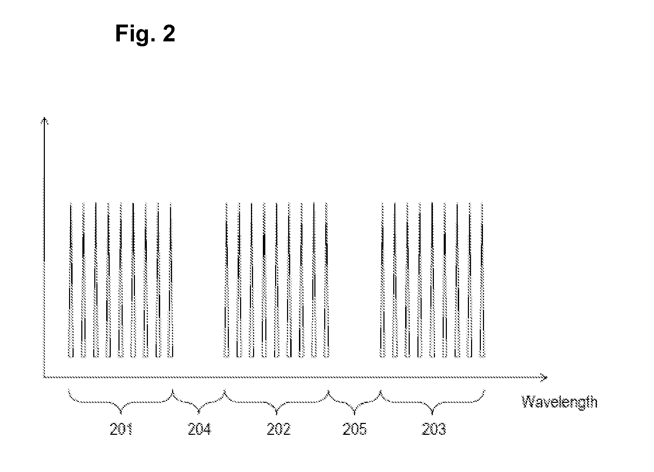

Each OTG generates several wavelengths. Fig.2 shows a diagram of an optical spectrum comprising a combination of OTGs, wherein a set of wavelengths 201 is generated by a first OTG, a set of wavelength 202 is generated by a second OTG and a set of wavelengths 203 is generated by a third OTG. Wavelengths from several OTGs can be combined onto a single fiber. Also, wavelengths from several LICs can be combined onto a single fiber. The wavelengths of the OTGs are separated by guard bands 204, 205 allowing frequency drifts of each set of wavelengths 201, 202, 203 without interference with its adjacent group of wavelengths.

A single UDWDM system may serve more than 1000 subscribers, but due to today's technology, an OTG in an OLT may be capable of handling only a significantly smaller amount of sub-scribers. Therefore, multiple OTGs are required to cope with a larger number of subscribers in a PON. As indicated in Fig.1, the OTGs are combined by the power splitter 113.

The general problem is to be solved is to reduce the energy consumed by optical access systems, in particular by the OLT of a Next Generation Optical Access (NGOA) system.

### SUMMARY OF THE INVENTION

In order to overcome the above-described need in the art, the present invention discloses a method for data processing in an optical network, the optical network including a first optical transmission group for generating a first plurality of wavelengths in a downstream direction, a second optical transmission group (33, 43) for generating a second plurality of wavelengths in the downstream direction and a plurality of optical network units for receiving the first and second plurality of wavelengths, wherein the plurality of optical network units are configured to change between a first mode and a second mode of data transmission, the method comprising the steps of allocating the wavelengths associated with the optical network units in the first mode of data transmission in the first optical transmission group, allocating the wavelengths associated with the optical network units in the second mode of data transmission in the second optical transmission group and deactivating the second optical transmission group.

In a next embodiment of the invention the first mode of data transmission includes an active mode of data transmission or high-speed mode of data transmission.

In other embodiments of the present invention, the optical network further comprises a first storing means for storing information on the mode of transmission of each optical network unit of the plurality of optical network units.

It is also an embodiment, that the optical network further comprises an optical line termination including the first and second optical transmission groups.

In a further embodiment, the optical line termination further comprises optical line termination management system for allocating the wavelengths according to the mode of transmission of the optical network units associated with the wavelengths.

In a next embodiment, the plurality of optical network units receives a first control signal from the optical line termination management system so that the wavelengths can be allocated according to the mode of transmission of the optical network units associated with the wavelengths.

In an alternative embodiment, the second mode of data transmission includes an inactive mode of data transmission or switched off mode of data transmission.

It is also an embodiment, that the second mode of data transmission includes a standby mode of data transmission or a low-speed mode of data transmission.

In a further embodiment, the optical network units being in the second mode of data transmission receive a second control signal from the optical line termination management system conveyed on a first wavelength in the downstream direction so that the wavelengths associated with the optical network units in the second mode of data transmission can be allocated in the second optical transmission group.

In a next embodiment, the first storing means is configured to store information on the optical network units witch should change the mode of transmission from the second mode of data transmission to the second mode of data transmission. In an alternative embodiment, the first wavelength in the downstream direction is a wavelength allocated exclusively for the optical network units being in the second mode of data transmission.

It is also an embodiment, that the first wavelength in the downstream direction is a wavelength belonging to the first plurality of wavelengths or a low speed channel.

In a further embodiment, the method further includes the following steps:
- the optical line termination management system selecting a first optical network unit among the optical network units being in the second mode of data transmission;
- the optical line termination management system transmitting a third control signal in the downstream direction to the first optical network unit on a second wavelength;
- the optical network unit transmitting a optical line termination management system transmitting in the upstream direction a fourth control signal to the optical line termination management system on the second wavelength informing about its current mode of transmission;
- terminating the transmission in the upstream direction;
- the optical line termination management system selecting a second optical network unit among the optical network units being in the second mode of data transmission.

In a next embodiment, the method further includes the following steps:
- the optical line termination management system selecting a first optical network unit among the optical network units being in the second mode of data transmission;
- the optical line termination management system transmitting a third control signal in the downstream direction to the first optical network unit on a second wavelength;
- the optical network unit transmitting a optical line termination management system transmitting in the upstream direction a fourth control signal to the optical line termination management system on the second wavelength informing about its current mode of transmission;
- terminating the transmission in the upstream direction;
- the optical line termination management system selecting a second optical network unit among the optical network units being in the second mode of data transmission.

The problem stated above is also solved by a system for optical networks, comprising: a first optical transmission group for generating a first plurality of wavelengths in a downstream direction, a second optical transmission group for generating a second plurality of wavelengths in the downstream direction; a plurality of optical network units for receiving the first and second plurality of wavelengths, wherein the plurality of optical network units are configured to change between a first mode and a second mode of data transmission; an optical line termination management system configured to allocate the wavelengths associated with the optical network units in the first mode of data transmission in the first optical transmission group and the wavelengths associated with the optical network units in the second mode of data transmission in the second optical transmission group and configured to deactivate the second optical transmission group.

The method and the system provided, in particular, bears the following advantages:
a) They provide a benefit related to power budget as well as cost efficiency.
b) The unused or empty OTGs can be switched off, thus saving the power for the optics and the signal processing.
c) The low speed standby ONUs do not lose connectivity to the upstream network and can be woken up from the upstream network in case, for example, of a wake-up due to an incoming call.
d) The standby-ONUs can signal their status information to the OLT without consuming a dedicated upstream wavelength of the OLT and thereby without reducing the possibilities of the OLT to save energy.
e) They combinine power-saving in the OLT with fast wake-up time for the ONUs.
f) They are easy to implement.

### BRIEF DESCRIPTION OF THE DRAWINGS

The invention is explained by way of example in more detail below with the aid of the attached drawings.
Fig.1 shows a UDWDM optical access system deployed with an optical line terminal (OLT).
Fig.2 shows a diagram of an optical spectrum comprising a combination of OTGs.
Fig.3 shows a diagram of an optical spectrum comprising a combination of OTGs according to an embodiment of the invention.
Fig.4 shows a diagram of an optical spectrum comprising a combination of OTGs according to another embodiment of the invention.

### DESCRIPTION OF THE INVENTION

As regards the description of Figures 1 to 2, reference is made to the background of the invention.

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

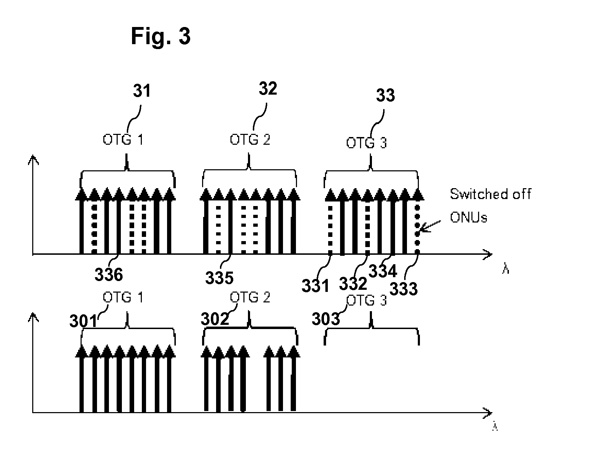

Fig.3 shows a diagram of an optical spectrum comprising a combination of OTGs according to an embodiment of the invention, wherein a set of wavelengths 31 is generated by a first OTG 1, a set of wavelength 32 is generated by a second OTG 2 and a set of wavelengths 33 is generated by a third OTG3.

As long as multiple ONUs are switched off (e.g.: 331, 332 and 333) but the remaining ONUs (e.g.: 334, 335, 336) are used, a complete OTG group (e.g OTG 3 or OTG 2) cannot be put in power-down mode. This makes it impossible for the OLT to power down some of the OTGs. According to an embodiment of the present invention, the OLT, in particular the OLT management system, can advise the remaining active ONUs (e.g.: 334, 335, 336) to re-arrange their wavelengths such that all OTGs are either fully loaded (e.g.: 301 and 302) or empty (e.g.: 303). In particular one OTG will be partially loaded if the number of active ONUs is not an integer multiple of the number of wavelengths generated by an OTG). The wavelength re-arrangement command may be transmitted via the so-called Almanac listing, a storing means which lists all available wavelengths for communication individually as "free" or as "used". The so-called Almanac listing is described in the European Patent Application EP 2 200 202 A1, herewith incorporated by reference in its entirety. After that all remaining ONUs (e.g.: 334, 335 and 336) have spectrally re-arranged themselves, the unused or empty OTGs (e.g.: 303) can be switched off, thus saving the power for the optics and the signal processing.

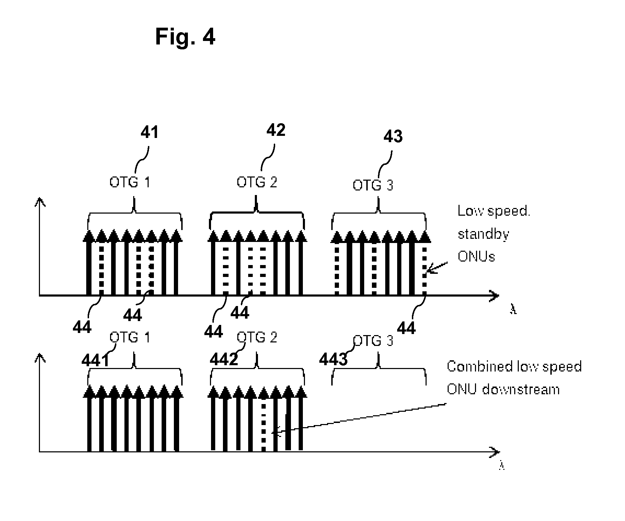

Fig.4 shows a diagram of an optical spectrum comprising a combination of OTGs according to another embodiment of the invention, wherein a set of wavelengths 41 is generated by a first OTG 1, a set of wavelength 42 is generated by a second OTG 2 and a set of wavelengths 43 is generated by a third OTG3. In the current embodiment of the present invention, however, a number of ONUs (e.g.: 431, 432 and 433) are not switched off but listen in a standby mode while the remaining ONUs (e.g.: 434, 435, 436) are used. The OLT management system knows about the standby ONUs (e.g.: 431, 432 and 433) and can re-arrange all low speed ONUs (e.g.: 431, 432 and 433) to listen on the same downstream wavelength 443, allowing for the OLT to switch off the unused OTGs (e.g.: 443) and to keep loaded the remaining OTGs (e.g.: 441 and 442). Fig. 4 shows in particular how the low speed standby ONUs (e.g.: 431, 432 and 433) are merged onto one single downstream wavelength 443.

An effect of the current embodiment of the present invention is that the low speed standby ONUs (e.g.: 431, 432 and 433) do not lose connectivity to the upstream network and can be woken up from the upstream network in case, for example, of a wake-up due to an incoming call.

The low speed standby-ONUs (e.g.: 431, 432 and 433) may use the downstream wavelength 443 to read the Almanac listing, the storing means which lists all available wavelengths for communication individually as "free" or as "used", and which also list the ONUs which should wake up. The low speed standby ONUs may read a wake-call in the Almanac listing and start a connection by moving to a free OLT channel.

In another embodiment of the present invention the low speed standby-ONUs in order to read the Almanac listing may not use a dedicated downstream wavelength for standby-ONUs but may simply use any other channel, whether it is used or unused.

In another embodiment of the present invention the dedicated downstream wavelength 443 for standby-ONUs can be a low-speed channel, which would allow the ONUs to reduce the consumed power even further.

In another embodiment of the present invention a method is provided which allows the standby-ONUs to signal their status information to the OLT without consuming a dedicated upstream wavelength of the OLT and thereby without reducing the possibilities of the OLT to save energy. According to the provided method:
- The OLT selects one of the standby-ONUs. This can be done according to a round-robin approach, for example.
- The OLT signals in the Almanac the selected ONU to send status information.
- The selected ONU uses the standby-channel to form a new upstream connection. The selected ONU has thereby a bidirectional and encrypted data channel to the OLT while the other ONUs still can read the Almanac.
- The selected ONU communicates with the OLT its status.
- The upstream connection is brought down.
- The OLT selects another standby ONU.

Alternatively, the selected ONU instead of using the standby-wavelength for bidirectional communication may use another wavelength. In this case the selected ONU is directed by the OLT management system to another wavelength.

According to another embodiment of the invention, a method is provided which allows the wake-up procedure in cases which the ONU has no access to the Almanac during the power-down mode. The provided method includes the following steps:
- Scan the optical band for the next downstream wavelength
- Read the Almanac
- Move to a free wavelength
- Lock to the downstream wavelength and form a connection

According to another embodiment of the invention, a method is provided which allows the wake-up procedure in cases which the ONU has no access to the Almanac during the power-down mode. The provided method includes the following steps:
- All standby-ONUs are locked to one or more standby-wavelengths and are able to read the Almanac continuously.
- Whenever one of the standby-ONUs decides to wake up, since its laser is already locked to the standby-wavelength, it can form a connection at this wavelength by simply sending light upstream.
- The OLT recognizes the connection.
- The other standby-ONUs still can read the Almanac.
- The OLT signals via the Almanac, that this wavelength is no standby-wavelength any more.
- The standby-ONUs, which have used this wavelength as standby until now, move to another standby-wavelength.
- If another standby-ONU wants to wake up after the first ONU has occupied the former standby-wavelength and it has not finished moving to another standby-wavelength, it moves directly to another free wavelength.

The proposed method can speed-up the access to the Almanac listing and is particularly effective especially if the typical time distance between wake-up events is larger than the time needed to move from one standby-wavelength to another standby-wavelength. This is particularly true in view of the circumstance that the probability that two ONUs want to wake up the same time, is very low. Moreover, the proposed method allows the OLT to handle a large number of standby-ONUs with a small number of active wavelengths, thereby combining power-saving in the OLT with fast wake-up time for the ONUs.

According to another embodiment of the invention, reducing the clock speed of the processing units included in the OLT digital signal processor which serves the low speed standby-ONUs it is possible to further reduce consumed power.

The present invention is not limited to the details of the above described principles. The scope of the invention is defined by the appended claims and all changes and modifications as fall within the equivalents of the scope of the claims are therefore to be embraced by the invention. Mathematical conversions or equivalent calculations of the signal values based on the inventive method or the use of analogue signals instead of digital values are also incorporated.

### List of Abbreviations:

- LIC: Linecard (also: Line Interface Card)
- LO: Local Oscillator
- NGOA: Next Generation Optical Access
- OLT: Optical Line Termination (carrier side)
- ONU: Optical Network Unit (subscriber side)
- OTG: Optical Transmission Group
- PON: Passive optical network
- UDWDM: ultra-dense WDM
- WDM: wavelength division multiplex

## Claims

1. A method for data processing in an optical network, the optical network including a first optical transmission group (32, 42) for generating a first plurality of wavelengths in a downstream direction, a second optical transmission group (33, 43) for generating a second plurality of wavelengths in the downstream direction and a plurality of optical network units for receiving the first and second plurality of wavelengths, wherein the plurality of optical network units are configured to change between a first mode and a second mode of data transmission, the method comprising:
allocating the wavelengths associated with the optical network units in the first mode of data transmission in the first optical transmission group (302, 442);
allocating the wavelengths associated with the optical network units in the second mode of data transmission in the second optical transmission group (303, 443);
deactivating the second optical transmission group (303, 443).

2. A method according to claim 1,
wherein the first mode of data transmission includes an active mode of data transmission or high-speed mode of data transmission.

3. A method according to any of the preceding claims,
wherein the optical network further comprises a first storing means for storing information on the mode of transmission of each optical network unit of the plurality of optical network units.

4. A method according to any of the preceding claims,
wherein the optical network further comprises an optical line termination including the first and second optical transmission groups.

5. A method according to claim 4,
wherein the optical line termination further comprises optical line termination management system for allocating the wavelengths according to the mode of transmission of the optical network units associated with the wavelengths.

6. A method according to claim 5,
the plurality of optical network units receiving a first control signal from the optical line termination management system so that the wavelengths can be allocated according to the mode of transmission of the optical network units associated with the wavelengths.

7. A method according to any of the preceding claims,
wherein the second mode of data transmission includes an inactive mode of data transmission or switched off mode of data transmission.

8. A method according to any of the preceding claims 1 to 5,
wherein the second mode of data transmission includes a standby mode of data transmission or a low-speed mode of data transmission.

9. A method according to claim 8,
wherein the optical network units being in the second mode of data transmission receive a second control signal from the optical line termination management system conveyed on a first wavelength in the downstream direction so that the wavelengths associated with the optical network units in the second mode of data transmission can be allocated in the second optical transmission group (303, 443).

10. A method according to claim 3 and any of the preceding claims 8 to 9,
wherein the first storing means is configured to store information on the optical network units witch should change the mode of transmission from the second mode of data transmission to the second mode of data transmission.

11. A method according to any of the preceding claims 9 to 10,
wherein the first wavelength in the downstream direction is a wavelength allocated exclusively for the optical network units being in the second mode of data transmission.

12. A method according to any of the preceding claims 9 to 10,
wherein the first wavelength in the downstream direction is a wavelength belonging to the first plurality of wavelengths or a low speed channel.

13. A method according to any of the preceding claims, further comprising:
the optical line termination management system selecting a first optical network unit among the optical network units being in the second mode of data transmission;
the optical line termination management system transmitting a third control signal in the downstream direction to the first optical network unit on a second wavelength;
the optical network unit transmitting a optical line termination management system transmitting in the upstream direction a fourth control signal to the optical line termination management system on the second wavelength informing about its current mode of transmission;
terminating the transmission in the upstream direction;
the optical line termination management system selecting a second optical network unit among the optical network units being in the second mode of data transmission.

14. A method according to any of the preceding claims, further comprising:
the optical line termination management system selecting a first optical network unit among the optical network units being in the second mode of data transmission;
the optical line termination management system transmitting a third control signal in the downstream direction to the first optical network unit on a second wavelength;
the optical network unit transmitting a optical line termination management system transmitting in the upstream direction a fourth control signal to the optical line termination management system on the second wavelength informing about its current mode of transmission;
terminating the transmission in the upstream direction;
the optical line termination management system selecting a second optical network unit among the optical network units being in the second mode of data transmission.

15. A system for optical networks, comprising:
a first optical transmission group (32, 42) for generating a first plurality of wavelengths in a downstream direction,
a second optical transmission group (33, 43) for generating a second plurality of wavelengths in the downstream direction;
a plurality of optical network units for receiving the first and second plurality of wavelengths, wherein the plurality of optical network units are configured to change between a first mode and a second mode of data transmission;
an optical line termination management system configured to allocate the wavelengths associated with the optical network units in the first mode of data transmission in the first optical transmission group (302, 442) and the wavelengths associated with the optical network units in the second mode of data transmission in the second optical transmission group (303, 443) and configured to deactivate the second optical transmission group (303, 443).
